# EUROPEAN PATENT APPLICATION

(11) **EP 0 751 097 A2**
(43) Date of publication of application: **02.01.1997**
(21) Application number: 96304646.1
(22) Date of filing: 24.06.1996
(51) Int. Cl.: C02F 1/68, G05D 11/00

(54) **Water treatment system**

(30) Priority: 27.06.1995 GB 9513106
(71) Applicant: OLIN (U.K.) LIMITED, Cutnall Green, Droitwich, Worcestershire WR9 0NS (GB)
(72) Inventor: Lipscombe, Michael John, Southampton, Hampshire SO1 4PY (GB); Jones, Alan, Derby (GB)
(74) Representative: Wilson, Nicholas Martin

(57) **Abstract**

A method of treating water passing through a main (104,106,108,110) comprises the steps of:
providing a bypass (111,117) including chemical delivery means (150,180), a bypass inlet and a bypass outlet in fluid communication with the main (104, 106,108,110), and valve means (118) for selectively interrupting flow of water to the chemical delivery means (150, 180);
passing water from the main (104,106,108,110) through said bypass (111,117) to dose said water at the chemical delivery means (150,180);
passing said dosed water back to the main (104,106,108,110);
selectively interrupting the flow of water to the chemical delivery means (150,180) and evacuating water from the chemical delivery means (104, 106, 108, 110) whilst the flow of water is interrupted.

## Description

This invention relates to a water treatment system, for example a water treatment system for introducing chemical into a swimming pool. Swimming pools are normally treated by a chlorine donor. Calcium hypochlorite is a typical source of chlorine and this is normally available in granular form. However, calcium hypochlorite has an inherent characteristic of forming scale, blockage and sedimentation which has caused other types of treatment systems to malfunction. A typical system is disclosed in US-A-4732689.

This system comprises two vertical feeder tubes containing chemical tablets, extending into a bath. The bath receives water from a main via an inlet branch pipe. The bath includes a linear weir, thus rendering the level of water in the bath directly proportional to the flow of water into the bath. Vertical slots extend from the lower end of each of the feeder tubes, thus exposing the tablets to the water. Thus the area of tablet exposed to water is directly proportional to the flow rate of water through the system.

The linear weir of this device is a precision engineered component, and the system is entirely dependent on flow rate. The device also relies on there being sufficient chemical tablets in the feeders that the stacks extend above the water surface in the bath for the entire range of the level of the surface. Thus a large quantity of chemical must be stocked.

Another treatment system is disclosed in US-A-4584106. That patent discloses a chlorination system for chlorinating a hot tub or spa and comprise a main tube defining a flow path to the tub and a chlorination unit including a feeder tube connected to and in parallel with the main tube having a chlorination chamber in which flow through the feeder tube is exposed to chlorination tablets. Positioned upstream and downstream of the chlorination chambers are baffles which serve to regulate flow and to prevent large particles of the chlorination tablets from escaping into the flow path.

The feeder tube forms a loop from the main flow path extending from the downstream (high pressure) side of a main circulating pump to the upstream (low pressure) side of the main circulating pump connected by inlet and outlet venturis. Thus the pressure differential created between the inlet and outlet of the feeder tube generated by the action of the venturis and circulating pump draws water through the chlorination unit to chlorinate the water. A control valve is provided in the feeder loop upstream of the chlorination unit which controls the flow of water and thus regulates the concentration of the treatment chemicals present in the pool water. In order to prevent the introduction of chemical completely, the control valve is used to close the feeder loop.

One of the problems associated with the above described unit is that many chemical tablets commonly used in the treatment of pool water have a high affinity to water, and as such will absorb water if allowed to remain in contact therewith for long periods. If the control valve of the system described above is switched to stop flow through the feeder loop, the water may stand in the feeder loop, in contact with the tablets. This is especially likely to occur in systems where the circulation system is situated below the pool. A relatively high gauge pressure is encountered upstream of the pump, which leads to insufficient suction to remove water from the feeder, and accordingly water is allowed to remain in the feeder. In this situation the tablets will eventually become saturated and will soften. On returning the flow to the feeder, the softened tablets will disintegrate quickly and will either cause a surge of highly chlorinated water to flow into the pool which would be hazardous or the chlorination unit would become clogged and require frequent attention to clear the blockage.

An object of the present invention is to provide an improved water treatment system.

The invention therefore includes a method of treating water passing through a main, the method comprising providing a bypass including chemical delivery means, a bypass inlet and a bypass outlet in fluid communication with the main, and valve means for selectively interrupting flow of water to the chemical delivery means, passing water from the main through said bypass to dose said water at the chemical delivery means, passing said dosed water back to the main, selectively interrupting the flow of water to the chemical delivery means, and evacuating water from the chemical delivery means whilst the flow of water is interrupted.

Preferably, the method further comprises providing a constriction in fluid communication with the main and the bypass outlet, and by means of the constriction drawing water through the bypass.

According to a further aspect of the invention there is provided a water treatment system comprising a main, a main inlet for receiving water into the system, a main outlet for delivering water from the system, a main pump for pumping water from the main inlet to the main outlet, and a bypass including chemical delivery means, said bypass including a bypass inlet and a bypass outlet in fluid communication with the main, the system further comprising means to draw water from said chemical delivery means and means for selectively interrupting flow of water to the chemical delivery means, such that on interruption of said flow, water is substantially removed from said delivery means.

The means for selectively interrupting flow of water may be valve means. The valve means may be a manually operable valve or an automatic control valve operative according to the concentration of chemical in the water in the main.

In one embodiment, the system further comprises a constriction in fluid communication with the main and with the bypass outlet, the constriction being arranged to exert suction on the bypass outlet to draw water through the bypass in use. Preferably the constriction is a venturi type constriction, the bypass outlet entering the constriction at the throat of the venturi.

The bypass may include a control valve situated upstream of the chemical delivery means. The control valve is operable to regulate flow through the chemical delivery means in order to regulate chemical delivery. If the control valve is shut off, water is drawn away from the chemical delivery means thus avoiding prolonged contact of the chemical delivery means with water.

The main pump is preferably situated between the main inlet and the main outlet. The bypass inlet may be in fluid communication with the main downstream of said pump.

A secondary branch may be provided, having an inlet and an outlet both in fluid communication with the main, the inlet being situated upstream of the outlet in the main, the constriction being situated in the secondary branch. The inlet and outlet of the branch are preferably situated downstream of the main pump.

The main may include devices such as a filter or a heater, preferably downstream of the main pump. Suitably the inlet of the secondary branch is upstream of such devices, and the outlet of the secondary branch is downstream of such devices.

The secondary branch is advantageous in cases where pressure upstream of the main pump is relatively high, such as where the system is arranged to receive, treat and discharge water of a swimming pool and the system is situated a considerable depth below the pool. In addition, in extreme cases, a secondary pump may be provided in the secondary branch between the inlet of the secondary branch and the constriction to improve the effectiveness of the constriction.

Isolating valves may be provided upstream and downstream of the chemical delivery means in the bypass to prevent flow of water in the bypass. This allows maintenance operations to be performed on the chemical delivery means without shutting down the entire system.

Isolating valves may be provided in the secondary branch for maintenance purposes.

Preferably the chemical delivery means is a feeder device comprising a body defining a flow path therethrough, a tablet tube opening into the flow path retaining a supply of chemical to be exposed to erosion by water caused to flow along the flow path, and shield means for partially shielding the chemical with respect to the flow of water.

The shield means may be movable to regulate the degree of exposure of the chemical to the flow of pool water. Preferably, the shield means comprises a portion of the tablet tube extending into the flow path, and the tablet tube further includes interengaging means on the tablet tube and on the body whereby the tablet tube is movably engaged with the body, in use movement of the tablet tube in a direction transverse to the flow of water moving the shield means with respect to the chemical thereby exposing more or less chemical according to the direction of movement.

The interengaging means may comprise cooperable screw threads on the tablet tube and body. The tablet tube is preferably threadingly engaged with the body whereby, screwing or unscrewing the tablet tube will determine the amount of chemical exposed to the flow of pool water.

Preferably, the chemical is in tablet form. The tablet may be gravity fed or may be biassed into position in the flow tube by suitable spring means.

Suitably, a platform may be disposed opposite the tablet tube on which the lowermost tablet rests in use. If desired, more than one tablet tube may open into the flow path.

The system may include sample means adapted to sample the concentration of the chemical in the main for control of said feeder device, and which said feeder device is arranged to return said flow to said main downstream of said sample means.

The sample means may be arranged to receive the flow of water downstream of the main pump and to return said flow upstream of said pump.

The invention will now be described by way of example with reference to the accompanying diagrammatic drawings in which:
Figure 1 is a schematic diagram of a first water treatment system according to the invention;
Figure 2 is a schematic diagram of a second water treatment system according to the invention;
Figure 3 is a schematic diagram of a third water treatment system according to the invention;
Figure 4 is an elevation from the downstream side of a feeder device for use with the invention, and
Figure 5 is a section on 6-6 in Figure 4.

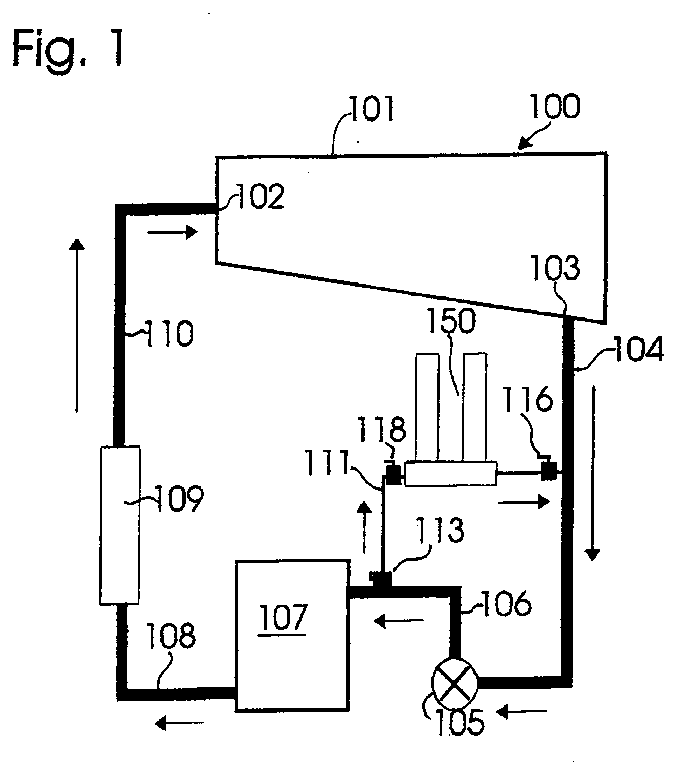

Figure 1 illustrates a first water treatment system 100 for a swimming pool 101 provided with an inlet 102 and an outlet 103. An outlet pipe 104 extends from the outlet 103 to an inlet of a main circulating pump 105. An outlet of the pump 105 is connected via a first main pipe 106 to an inlet of a filter 107. A second main pipe 108 extends from an outlet of the filter 107 to an inlet of a water heater 109. A third main pipe 110 extends from an outlet of the water heater 109 to the inlet 102 of the swimming pool 100, completing the main flow circuit.

A branch pipe 111 branches from the first main pipe 106 and rejoins the main flow circuit by connecting to the outlet pipe 104. The first branch pipe 111 includes, in series from upstream to downstream, a first isolating valve 113, a control valve 118, a feeder device 150 and a second isolating valve 116.

The embodiment of the invention is effective when the system is to be installed above or level with the swimming pool 101. In this case, the pressure in the outlet pipe 104 is sufficiently low that on closure of the control valve 118 or the first isolating valve 113, water is drawn out of the feeder device 150 by the pressure differential and the action of the main pump 105.

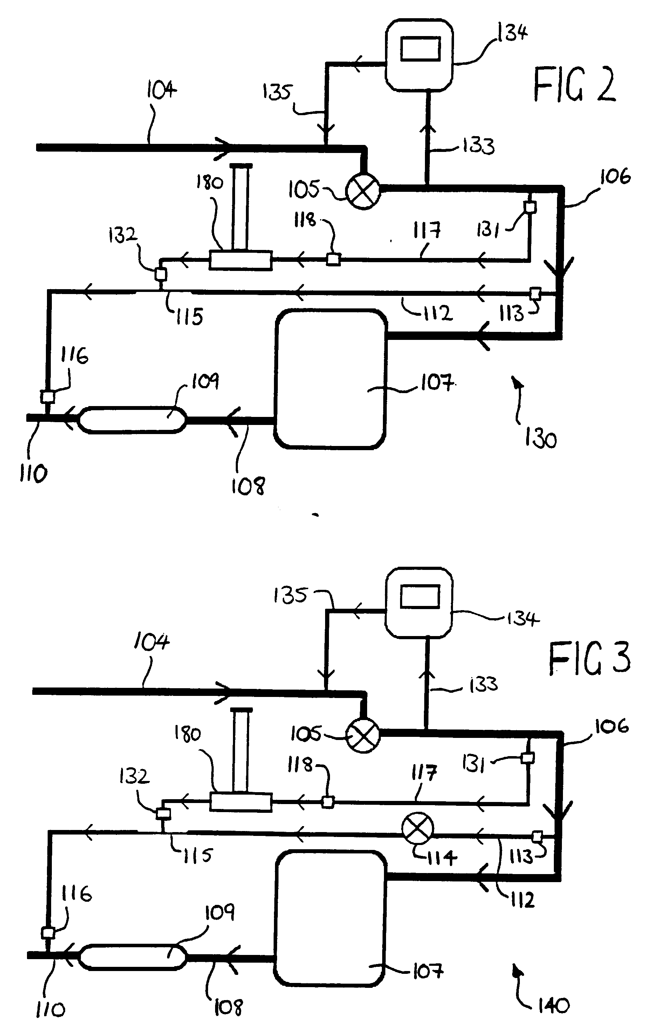

Figure 2 illustrates schematically a second water treatment system 130 for the swimming pool 101 (not shown). The second system includes a main flow circuit as described with reference to figure 1 and the same reference numerals have been used for corresponding parts. A first branch pipe 112 branches from the first main pipe 106 and rejoins the main flow circuit by connecting to the outlet pipe 110. The first branch pipe 112 includes, in series from upstream to downstream, a first isolating valve 113, a venturi 115 and a second isolating valve 116. A second branch pipe 117 is connected at its upstream end to first main pipe 106 upstream of the connection of the first branch pipe 112 to the first main pipe 106. The second branch pipe 117 includes, in series from upstream to downstream, a first isolation valve 131, the control valve 118 as previously described, a feeder device 180 and a second isolation valve 132. The feeder device 180 is of similar construction to feeder device 150 of the first system; the differences between the two feeder devices 150, 180 will be described below.

A sample cell feeder pipe 133 extends from the first main pipe 106 upstream of the connection of the second branch pipe 117 to the first main pipe 106. The sample cell feeder pipe 133 extends to the inlet of a sample cell 134 which is operative to measure chemical concentrations. Control equipment (not shown) may be used to process the results obtained by the sample cell 134 to control the control valve 118 in response to changes in chemical concentration. A sample cell outlet pipe 135 extends from the sample cell 134 and connects to the outlet pipe 104. Thus a sample loop is formed, water being driven around the loop by the action of the pump 105.

Figure 3 illustrates schematically a third water treatment system 140 for the swimming pool 101 (not shown) including a main flow circuit; first branch pipe 112, second branch pipe 117 and sample loop as described with reference to the second system 130. Additionally, a booster pump 114 as described with reference to the first system 100 is provided in the first branch pipe 112.

The third system 140 is particularly effective when the system is situated a considerable depth below the water level of the swimming pool. The booster pump increases the effectiveness of the venturi 115, which is extremely important because of the high pressure which will be encountered upstream of the main pump 105 and the feeder device 180.

The second system 130 is effective when installed moderately below the swimming pool water level. It is cheaper than the third system, both in apparatus and installation costs as only one pump need be provided.

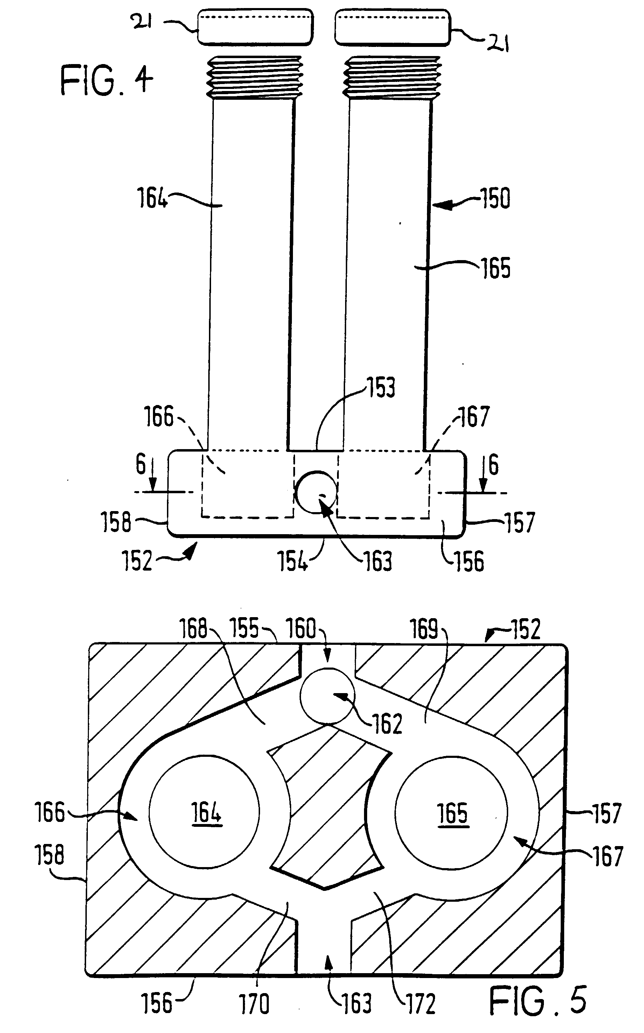

Figures 4 and 5 illustrate the feeder device 150 shown schematically in figure 1 except that in figure 1 the feeder tubes are shown aligned for simplicity. The feeder device 150 comprises a flat rectangular body 152 including upper and lower faces 153, 154, upstream and downstream faces 155, 156 and side faces 157, 158. An inlet bore 160 of circular cross section extends from the centre of the upstream face 155, within the body 152. An auxiliary inlet bore 162 extends from the upper face 153, proximate the edge adjoining the upstream face 155, and joins the inlet bore 160. An outlet bore 163 extends within the body 152 from the downstream face 156 coaxially with the inlet bore 160.

Two feeder tubes 164, 165 extend perpendicularly with respect to the upper face 153, and are arranged symmetrically about the axis of the inlet bore 160 and the outlet bore 163.

The feeder tubes 164, 165 threadingly extend within the body 152 to respective tablet dissolving chambers 166, 167.

The distal end of each feeder tube 164, 165 is closed by a screw cap 21 sealed to the feeder tube 164, 165 by an O-ring (not shown). The feeder tubes 164, 165 are provided in use with one or more pool chemical tablets, known as DURATION (Registered Trade Mark). Each tablet dissolving chamber is cylindrical and coaxial with the respective feeder tube, a chemical tablet in use emerging from the feeder tube and resting on the floor on the tablet dissolving chamber. By rotating the feeder tubes 164, 165 the amount of chemical exposed to the flow of water may be adjusted. The inlet bore 160 splits into two inlet branches 168, 169 each of which extends to a respective tablet dissolving chamber. Each tablet dissolving chamber has an outlet branch 170, 172, which join and form the outlet bore 163.

Where pools are fitted with auto dosing control, the feeder device 150 is located so as to introduce treated water downstream of the sample cell, since introduction of chemical upstream of the sample cell would otherwise provide a false reading.

The removable cap 21 allows chemicals to be replenished after first isolating the feeder device 150 by closing both isolation valves.

The feeder device 150 is totally variable by either:
- partial closure of the isolating and control valves upstream of the inlet and downstream of the outlet thereby reducing the amount of pool water through the feeder; or,
- by raising or lowering the feeder tube (19) to increase or decrease the amount of chemical to be exposed.

The feeder device 180 of Figures 2 and 3 is similar to the feeder device of Figure 1. However, the device has only one feeder tube and consequently only one tablet dissolving chamber.

In each embodiment of the invention, it is envisaged that on occasions it may be necessary to close the control valve to prevent delivery of chemical to the pool. In such a case, since the flow through the feeder is driven mainly by low pressure being encountered at the outlet, water downstream of the control valve will drain out of the feeder device, thus preventing the collection of standing water in contact with chemical within the feeder device. A further advantage of the systems is that drainage of the feeder device is achievable without switching off pumps.

The cap 21 of the feeder tube may incorporate an air vent (not shown).

In use, the water level should rise up the feeder tube no higher than half of one tablet. However, the chlorine output can be increased slightly by allowing the water level to rise higher up the feeder tubes. This level can be adjusted by manipulation of the inlet/outlet valves and the air vent. It should be noted that this will increase the calcium build up on the inside of the tubes and, if the feeder tubes are transparent, will in time obscure the view of the tablets within the tubes.

Under normal conditions the device will operate under a slight vacuum. Therefore if the air vent is opened air will be drawn into the system.

If it is required to increase the chlorine output by increasing the water level in the tablet tubes the pressure must be raised to atmospheric pressure. This is achieved by adjusting the air vent and outlet isolating valve to create a slight back pressure.

## Claims

1. A method of treating water passing through a main (104,106,108,110), the method comprising providing a bypass (111,117) including chemical delivery means (150,180), a bypass inlet and a bypass outlet in fluid communication with the main (104,106,108,110), and valve means (118) for selectively interrupting flow of water to the chemical delivery means (150,180), passing water from the main (104,106,108,110) through said bypass (111,117) to dose said water at the chemical delivery means (150,180), passing said dosed water back to the main (104,106,108,110), selectively interrupting the flow of water to the chemical delivery means (150,180), and evacuating water from the chemical delivery means (150,180) whilst the flow of water is interrupted.

2. A method according to claim 1 further comprising providing a constriction (115) in fluid communication with the main (104,106,108,110) and the bypass outlet, and by means of the constriction (115) drawing water through the bypass (117).

3. A method according to claim 1 further comprising providing a main pump (105) in the main (104,106,108,110) downstream of the bypass outlet in the main (104,106,108,110), thereby drawing water through the bypass (111).

4. A method according to any preceding claim further comprising sampling water passing through the main and measuring the concentration of chemical in said water.

5. A method according to claim 4 comprising sampling water upstream of the bypass outlet in the main (104,106,108,110).

6. A method according to claim 4 or claim 5 comprising controlling the flow of water to the chemical delivery means (150,180) in response to the measured concentration of chemical in said water.

7. A water treatment system comprising a main (104,106,108,110), a main inlet (103) for receiving water into the system, a main outlet (102) for delivering water from the system, a main pump (105) for pumping water from the main inlet (103) to the main outlet (102), and a bypass (111,117) including chemical delivery means (150,180), said bypass (111,117) including a bypass inlet and a bypass outlet in fluid communication with the main (104,106,108,110), the system further comprising means (105,115) to draw water from said chemical delivery means (150,180) and means (118) for selectively interrupting flow of water to the chemical delivery means (150,180), such that on interruption of said flow, water is substantially removed from said chemical delivery means (150,180).

8. A system according to claim 7 wherein the means (118) for selectively interrupting flow is valve means.

9. A system according to claim 7 or claim 8 further comprising a constriction (115) in fluid communication with the main (104,106,108,110) and with the bypass outlet, the constriction (115) being arranged to exert suction on the bypass outlet to draw water through the bypass (117) in use.

10. A system according to claim 9 wherein the constriction (115) is a venturi.
